# FASCICULE DE BREVET EUROPEEN

(11) **EP 0 799 666 B1**
(45) Date de publication et mention de la délivrance du brevet: **07.02.2001**
(21) Numéro de dépôt: 97400647.0
(22) Date de dépôt: 21.03.1997
(51) Int. Cl.: B23K 9/167, B23K 35/38

(54) **Procédé et dispositif de réduction des émissions d'ozone produites lors d'une opération de soudage à l'arc sous gaz de protection**
Verfahren und Vorrichtung zur Verringerung der Entstehung von Ozon beim Lichtbogen-Schutzgasschweissen
Process and apparatus for reducing the emission of ozone produced during a gas shielded arc welding operation

(30) Priorité: 03.04.1996 FR 9604163
(43) Date de publication de la demande: 08.10.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Bonnet, Christian, 95420 Magny-en-Vexin (FR); Briand, Francis, 75010 Paris (FR); Suzon, Serge, 95300 Pontoise (FR); Lefebvre, Philippe, 95310 Saint-Ouen-L'Aumone (FR)
(74) Mandataire: Le Moenner, Gabriel

(56) Documents cités:
- EP-A- 0 020 174
- EP-A- 0 604 014
- CA-A- 1 171 467
- DE-A- 2 854 897
- FR-A- 2 369 900
- US-A- 4 680 440

## Description

La présente invention concerne un procédé de réduction des émissions d'ozone produites lors d'une opération de soudage à l'arc sous gaz de protection. Un tel procédé est connu du document FR-A-2 369 900, qui est considéré comme l'état de la technique le plus proche.

Elle concerne en outre une utilisation d'un gaz pour la réduction des émissions d'ozone produites lors d'une opération de soudage à l'arc sous gaz de protection, ainsi qu'un dispositif de réduction des émissions d'ozone produites lors du soudage à l'arc sous gaz de protection.

Les dispositifs actuels de soudage sous gaz de protection, mettant en oeuvre un arc électrique établi entre une électrode et l'objet à souder, sont à l'origine d'un dégagement d'ozone (O₃). Ce dégagement d'ozone est nuisible pour l'environnement et dangereux pour les personnes exposées. Des solutions ont été proposées pour limiter la création et le dégagement d'ozone.

En particulier, il est actuellement admis que la création d'ozone au cours du soudage est provoquée par les ultraviolets émis par l'arc de soudage. Ces ultraviolets proviennent de l'excitation ou de l'ionisation d'espèces gazeuses ou métalliques présentes dans l'arc.

Compte tenu de ce mécanisme de génération de l'ozone, il a été tenté d'interposer, entre l'arc électrique et l'atmosphère, un mélange gazeux adapté pour absorber les émissions d'ultraviolets, ou pour déplacer les émissions d'ultraviolets vers des bandes spectrales plus faiblement génératrices d'ozone, voir EP-A-0 604 014. Les solutions n'ont pas conduit à de bons résultats dans la mesure où d'une part les mélanges gazeux compatibles avec le soudage et absorbant les ultraviolets sont peu nombreux, et où d'autre part il n'y a pas de moyens simples à mettre en oeuvre pour déplacer les bandes spectrales d'émissions à l'exception de l'emploi de gaz rares mais qui ne donnent pas d'importantes réductions.

Il a également été envisagé de neutraliser l'ozone en mettant dans le mélange gazeux de protection des espèces qui réagissent avec lui (voir FR-A-2 369 900). Cette solution ne donne pas non plus de bons résultats car la plupart de ces espèces sont soit efficaces mais dangereuses, soit incompatibles en regard des propriétés requises par le joint soudé.

Le but de la présente invention est de fournir un moyen de réduire les émissions d'ozone produites, qui soit efficace, facile à mettre en oeuvre et compatible avec les habitudes de soudage actuelles.

A cet effet, l'invention a pour objet un procédé de réduction des émissions d'ozone produites lors d'une opération de soudage à l'arc sous gaz de protection, caractérisé en ce qu'il comporte la mise en oeuvre d'un gaz gainant l'arc électrique, lequel gaz gainant a une température supérieure à 100°C immédiatement en amont de la racine de l'arc électrique.

Le procédé peut présenter l'une ou plusieurs des caractéristiques suivantes :
- ladite température du gaz gainant est comprise entre 100°C et 500°C ;
- ladite température du gaz gainant est comprise entre 200°C et 300°C et est notamment voisine de 250°C ;
- le gaz gainant est le gaz de protection ;
- le gaz gainant est distinct du gaz de protection et la veine de gaz gainant entoure la veine de gaz de protection ;
- le gaz gainant contient de l'oxygène et est notamment de l'air ambiant ; et
- le procédé de soudage à l'arc est un procédé de soudage sous gaz de protection à électrode réfractaire (soudage TIG).

Elle a en outre pour objet une utilisation pour la réduction des émissions d'ozone produites lors d'une opération de soudage à l'arc sous gaz de protection, d'un gaz ayant, immédiatement en amont de la racine de l'arc électrique, une température supérieure à 100°C, ce gaz gainant l'arc électrique de soudage.

L'invention a également pour objet un dispositif de réduction des émissions d'ozone produites lors du soudage à l'arc sous gaz de protection, du type comportant une électrode destinée à être connectée à l'un des pôles d'un générateur de soudage dont l'autre pôle est relié à l'objet à souder, et des moyens d'alimentation en gaz de protection pour protéger le bain de fusion et l'arc électrique établi entre l'électrode et l'objet à souder, caractérisé en ce qu'il comporte des moyens de mise en oeuvre d'un gaz gainant l'arc électrique et ayant une température supérieure à 100°C immédiatement en amont de la racine de l'arc électrique.

Le dispositif peut comporter l'une ou plusieurs des caractéristiques suivantes :
- ladite température du gaz gainant est comprise entre 100°C et 500°C et est notamment voisine de 200°C ;
- la température du gaz gainant est comprise entre 200°C et 300°C et est notamment voisine de 250°C ;
- les moyens d'alimentation en gaz de protection comportent une buse interne qui entoure ladite électrode, et lesdits moyens de mise en oeuvre du gaz gainant comportent des moyens de chauffage et d'alimentation du gaz et une buse externe de sortie du gaz gainant qui entoure ladite buse interne ;
- les moyens d'alimentation en gaz de protection comportent une buse qui entoure ladite électrode, le gaz gainant est le gaz de protection, et lesdits moyens de mise en oeuvre du gaz gainant comportent des moyens de chauffage du gaz de protection avant sa sortie de la buse;
- la buse est intégrée dans une torche et lesdits moyens de chauffage du gaz de protection sont logés dans ladite torche ;
- les moyens de chauffage du gaz de protection sont disposés dans le passage du gaz à l'intérieur de la buse ;
- les moyens de chauffage comportent une résistance chauffante alimentée par une source de courant électrique ; et
- les moyens de chauffage comportent une barrière poreuse disposée en travers du passage du gaz à l'intérieur de la buse, cette barrière créant une perte de charge dans l'écoulement gazeux, assurant ainsi le chauffage du gaz accumulé en amont de ladite barrière par transfert de chaleur depuis la structure de la buse, elle-même chauffée à partir de l'énergie rayonnée par l'arc électrique.

L'invention sera mieux comprise à la lecture de la description qui va suivre, donnée uniquement à titre d'exemple et faite en se référant aux dessins sur lesquels :
- La figure 1 est une vue schématique d'un dispositif de soudage selon l'invention muni d'une torche double flux représentée en coupe longitudinale ;
- La figure 2 est une vue schématique d'un dispositif de soudage selon l'invention muni d'une torche simple flux représentée en coupe longitudinale ;
- La figure 3 est une vue en coupe suivant la ligne III-III de la torche de la figure 2 ;
- La figure 4 est une vue en coupe longitudinale d'une variante de réalisation de la torche de la figure 2, et
- La figure 5 est un diagramme montrant l'évolution du facteur de réduction d'ozone en fonction de la température du gaz gainant.

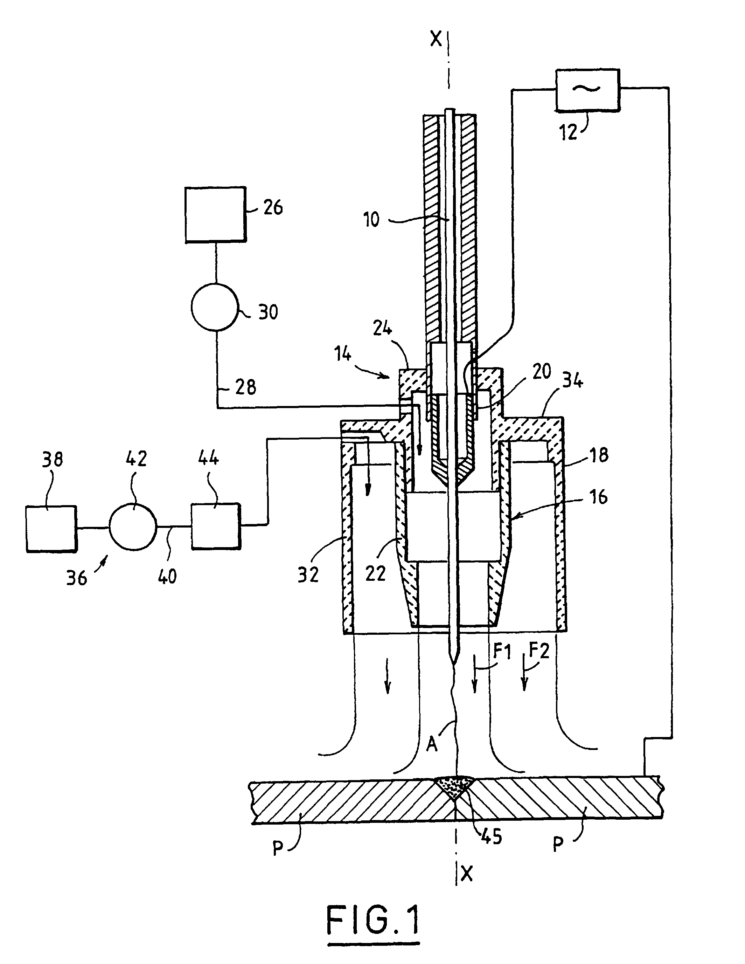

Le dispositif de soudage représenté sur la figure 1 est destiné au soudage à l'arc sous gaz de protection à électrode réfractaire non consommable (communément appelé soudage Tungsten Inert Gas ou TIG). Il comporte une électrode 10 réfractaire et non consommable, par exemple en tungstène. Cette électrode est connectée à l'un des pôles d'un générateur de soudage 12 (générateur de courant) dont l'autre pôle est connecté à l'objet à souder. Ce dernier est matérialisé sur la figure par deux plaques P juxtaposées. L'électrode 10 est intégrée axialement à l'intérieur d'une torche 14. Cette dernière comporte une buse interne 16 montée coaxialement à l'intérieur d'une buse externe 18. Ainsi, la torche 14 est dans l'ensemble de révolution d'axe X-X supposé vertical sur la figure.

L'électrode 10 est maintenue suivant l'axe de la buse 16 par une pince porte-électrode métallique 20 à laquelle est connecté le générateur de soudage 12 pour l'alimentation de l'électrode 10. La buse 16 est formée par un manchon 22 obturé à son extrémité supérieure par une coupelle 24 dont le fond est traversé par l'électrode 10 et la pince 20. La buse 16 est reliée à une source 26 de gaz de protection, par exemple de l'argon. Une conduite 28 sur laquelle est disposé un détendeur 30 relie la source 26 à la buse 16.

Autour de la buse 16 sont disposés des moyens de mise en oeuvre d'un gaz gainant l'arc électrique, ce gaz ayant une température supérieure à 100°C en sortie de buse. Ainsi, la buse externe 18 entourant la buse interne 16 assure un guidage de ce gaz gainant. Cette buse 18 est formée par un manchon 32 obturé à sa partie supérieure par un fond 34 pourvu d'un passage pour l'alimentation du gaz. Elle débouche, à son extrémité ouverte, sensiblement dans le même plan que la buse 16, ce plan s'étendant perpendiculairement à l'axe X-X. L'électrode 10 dépasse légèrement des buses 16 et 18.

Les moyens de mise en oeuvre du gaz gainant comportent en outre des moyens 36 de chauffage et d'alimentation du gaz gainant. Ces derniers sont reliés au passage d'alimentation de la buse 18. Ils comportent une source 38 de gaz gainant, reliée à la buse 18 par une conduite 40 sur laquelle sont disposés des moyens 42 de mise en circulation du gaz et des moyens de chauffage 44.

Le gaz gainant peut être par exemple de l'air atmosphérique. Dans ce cas, la source 38 est formée par une simple entrée d'aspiration alors que les moyens de mise en circulation 42 sont formés par un compresseur.

Les moyens de chauffage 44 comportent par exemple une chambre dans laquelle sont disposées des résistances chauffantes reliées à une source d'alimentation en énergie électrique. Ils sont dimensionnés pour permettre au gaz gainant d'avoir en sortie de la buse 18 une température comprise entre 100°C et 500°C et notamment comprise entre 200°C et 300°C et par exemple égale à 250°C environ.

Les températures indiquées correspondent à la température du gaz gainant mesurée en sortie de la buse en l'absence d'arc électrique.

En fonctionnement, le gaz de protection circule suivant la direction de la flèche F1 le long de l'arc électrique A établi entre l'extrémité de l'électrode 10 et les plaques P. Il protège l'arc électrique et le bain de fusion 45 formé entre les plaques. Le gaz gainant, sortant de la buse 18 suivant le sens des flèches F2, forme une veine annulaire de gaz chauffé autour de la veine de gaz de protection. Ainsi, le gaz chauffé forme une gaine autour de l'arc électrique.

On constate de manière surprenante qu'avec un tel agencement, les quantités d'ozone mesurées à proximité de la soudure, dans l'atmosphère environnante, sont largement inférieures aux quantités d'ozone mesurées lors d'un soudage sans mise en oeuvre d'un gaz gainant chauffé.

Dans l'exemple décrit précédemment, le gaz gainant chauffé est de l'air, c'est-à-dire un gaz contenant de l'oxygène.

Une hypothèse d'explications du phénomène qui se produit dans la veine de gaz gainant est la suivante. Les rayons ultraviolets produits lors du soudage sont absorbés par l'oxygène présent et provoquent la formation d'ozone dans la veine gazeuse. Sous l'effet de la température élevée du gaz gainant, l'ozone se détruit quasi-immédiatement pour redonner notamment de l'oxygène, de sorte que seule une très faible quantité d'ozone est libérée dans l'atmosphère.

Le gaz gainant peut être formé d'un gaz ne contenant pas initialement d'oxygène dans lequel de l'oxygène a été ajouté afin de permettre la mise en oeuvre du phénomène supposé indiqué ci-dessus.

D'autres gaz que l'air peuvent être utilisés pour former le gaz gainant et en particulier des gaz ne contenant pas d'oxygène. On constate également dans ce cas une réduction importante de l'ozone produit.

On peut tenter d'expliquer le phénomène produit par le transfert de chaleur qui s'opère entre la veine de gaz gainant chauffé et l'air ambiant. L'oxygène de l'air à l'interface avec le gaz gainant absorbe les rayons ultraviolets produits par l'arc électrique et se transforme en ozone. Toutefois, l'air ambiant situé à l'interface étant chauffé au contact de la veine de gaz gainant chauffé, l'ozone produit se détruit quasi-immédiatement.

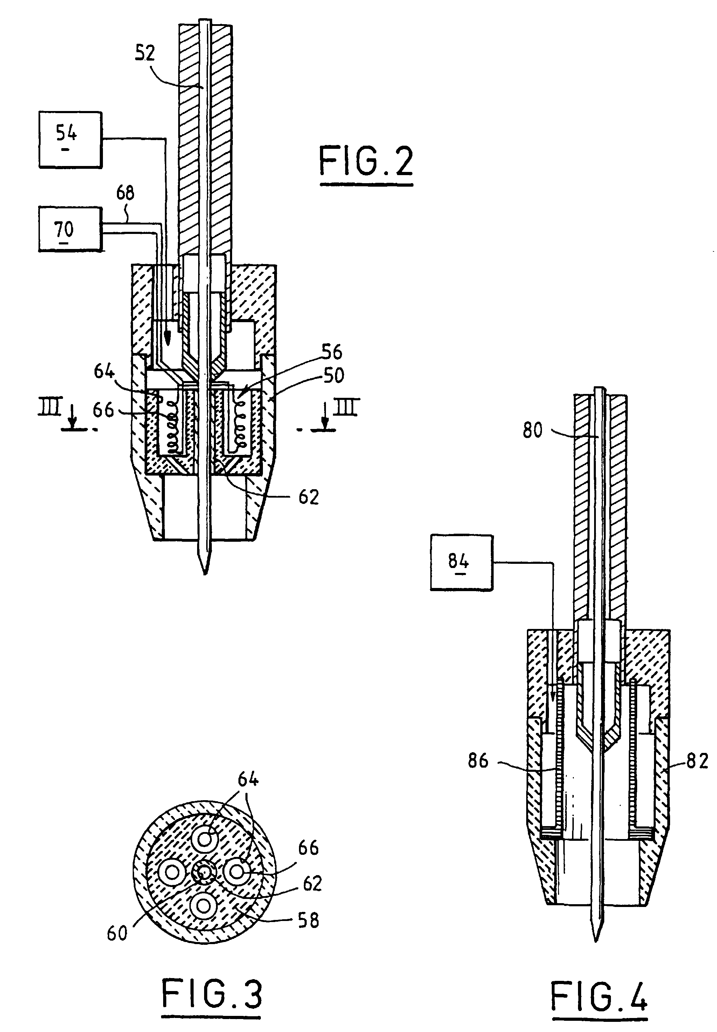

Sur la figure 2 est représenté un dispositif de soudage à torche simple flux pour la réduction des émissions d'ozone produites lors d'un soudage à l'arc sous gaz de protection. La torche comporte une unique buse 50, au centre de laquelle est disposée axialement une électrode non consommable 52, qui dépasse légèrement de la buse. La buse 50 est alimentée à partir d'une source 54 en gaz de protection sous pression, de l'argon par exemple. Dans le passage du gaz de protection, à l'intérieur de la buse 50, sont disposés des moyens de chauffage du gaz 56. Ces derniers, représentés en coupe transversale sur la figure 3, comportent un support cylindrique 58 en matériau réfractaire disposé transversalement à l'intérieur de la buse. Un passage central 60 y est ménagé pour l'électrode. Une bague isolante 62 est en outre disposée dans ce passage. Quatre perçages longitudinaux 64 pour le passage du gaz sont ménagés au travers du support 58. A l'intérieur de ces passages 64 sont disposés des résistances électriques chauffantes 66, reliées par des conducteurs 68 à une source d'énergie électrique 70.

Dans ce mode de réalisation, le gaz de protection issu de la source 54 circule dans la buse 50 en traversant les passages 64. Au contact des résistances chauffantes 66, le gaz de protection est chauffé avant sa sortie de la buse. Les résistances chauffantes sont adaptées pour permettre un chauffage du gaz à une température comprise entre 100 et 500°C et notamment comprise entre 200°C et 300°C et par exemple égale à environ 250°C. Les températures indiquées sont mesurées en sortie de la buse en l'absence d'arc électrique.

Dans ce mode de réalisation, on conçoit que le gaz de protection de l'arc électrique porté à une température supérieure à 100°C forme en sortie de la buse une veine gazeuse gainant l'arc.

Comme précédemment, on constate, lors du soudage avec un tel dispositif, que la production d'ozone est largement réduite par rapport au même dispositif dans lequel les résistances chauffantes ne sont pas alimentées en énergie électrique, de sorte que le gaz de protection est à température ambiante.

La figure 4 représente un autre mode de réalisation d'une torche à simple flux. Cette torche comporte une électrode 80 disposée axialement à l'intérieur d'une buse 82 en matériau réfractaire et dépassant légèrement de cette buse.

Comme dans le mode de réalisation précédent, la buse 82 est reliée à une source de gaz de protection 84. A l'intérieur de la buse 82 est disposée une barrière 86 annulaire réalisée dans un matériau poreux. Celle-ci présente une paroi cylindrique centrée sur l'électrode 80 et s'étendant sur l'essentiel de la hauteur de la buse, en travers du passage du gaz. Cette barrière crée une perte de charge importante à l'intérieur de la buse pour le gaz de protection arrivant depuis le stockage 84 sous pression. Ainsi, le gaz de protection séjourne à l'intérieur de la buse en amont de la barrière 86 avant son évacuation. Il y est chauffé par transfert de chaleur depuis la structure de la buse 82, elle-même chauffée par l'énergie rayonnée par l'arc électrique lors du soudage. En sortie de la buse, la veine de gaz de protection gainant l'arc électrique a une température supérieure à 100°C et notamment égale à 250°C environ.

Comme dans les modes de réalisation précédents, une quantité d'ozone faible est produite lors du soudage avec un tel dispositif.

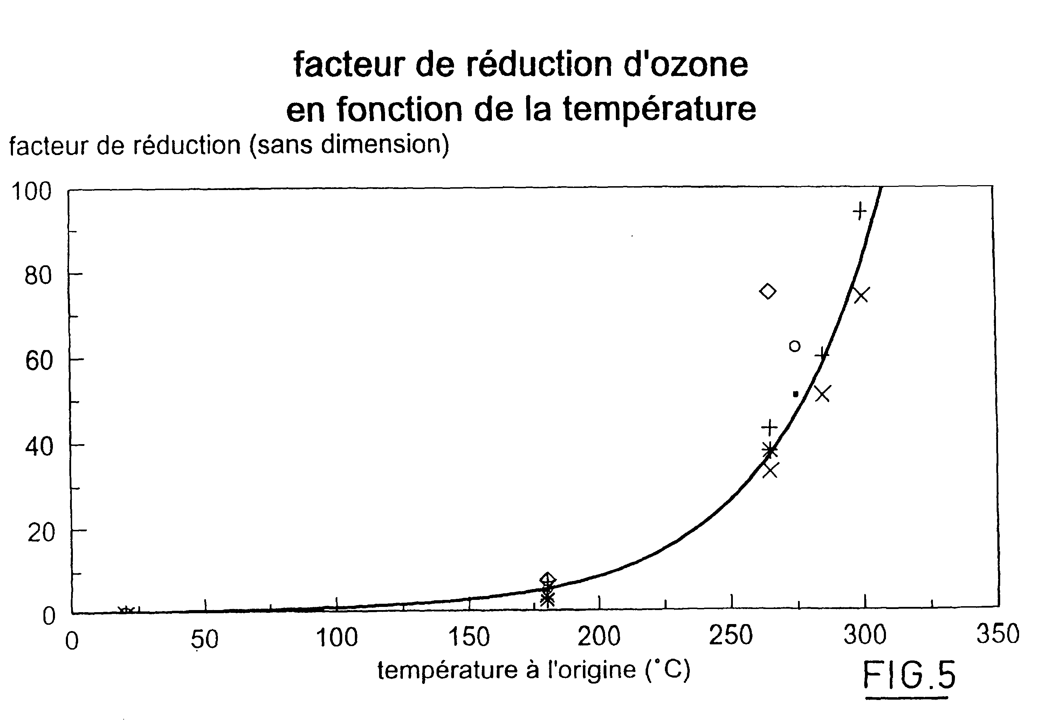

La figure 5 montre l'intérêt du chauffage du gaz de protection ou l'ajout d'une veine de gaz chauffé en soudage à l'arc TIG.

Ce diagramme porte en abscisses la température à laquelle a été porté le gaz gainant, et en ordonnées le facteur de réduction d'ozone.

Le facteur de réduction est une grandeur sans dimension, définie comme le rapport de la concentration en ozone mesurée sans chauffage du gaz à la concentration en ozone mesurée avec chauffage du gaz à la température considérée.

Les essais ont été réalisés à l'aide d'une torche mono-flux dans un caisson avec une ventilation contrôlée. Le gaz de protection utilisé était de l'argon, et les essais ont été réalisés sur de l'acier inoxydable et sur de l'aluminium qui sont, dans les faits, des alliages pour lesquels les émissions d'ozone lors du soudage sous argon sont importantes.

Le chauffage de l'argon a été assuré par un échangeur thermique placé en amont de la torche et qui permet d'obtenir en sortie de buse des températures comprises entre 150°C et 300°C à des débits compatibles avec le soudage. Les températures ont été mesurées en l'absence d'arc de soudage, avec un thermocouple de type K placé dans le plan de sortie de la buse de soudage. La concentration d'ozone a été mesurée par une technique d'absorption d'ultraviolets en trois points distincts autour de la torche situés à différentes distances de celle-ci (40 et 100 mm) et à différentes hauteurs au-dessus de la tôle (150 et 190 mm). Du fait des variations inhérentes à la mesure de l'ozone, pour chaque mesure, la valeur la plus basse et la valeur la plus haute de concentration obtenue sont représentées.

On constate sur ce diagramme une forte réduction de la quantité d'ozone mesurée pour des températures supérieures à 200°C environ. Le facteur de réduction est alors proche de 10. Pour une température de chauffage de 100°C, le facteur de réduction estimé est voisin de 2.

On notera que les exemples décrits ici utilisent de l'argon (cas des torches simple flux) ou de l'air (cas de la torche double flux), mais que tout autre gaz ou mélange de gaz peut être utilisé.

De plus, un gaz gainant chauffé peut également être mis en oeuvre dans des installations de soudage à électrode consommable communément appelé soudage de type Metal Inert Gas ou MIG, avec pour résultat une diminution significative de l'ozone produit.

Par ailleurs, les moyens de chauffage du gaz gainant peuvent également, dans le cas d'une torche double flux (figure 1), être intégrés dans la torche et en particulier être disposés à l'intérieur de la buse suivant un agencement analogue à celui représenté à la figure 2 ou 4.

En outre, les moyens de chauffage, et notamment des résistances électriques, peuvent également être logés dans le corps de torche mais à l'extérieur de la buse. Ils sont par exemple disposés dans le conduit d'alimentation en gaz gainant traversant la torche.

## Revendications

1. Procédé de réduction des émissions d'ozone produites lors d'une opération de soudage à l'arc sous gaz de protection, comportant la mise en oeuvre d'un gaz gainant l'arc électrique, caractérisé en ce que ledit gaz gainant a une température supérieure à 100°C immédiatement en amont de la racine de l'arc électrique.

2. Procédé selon la revendication 1, caractérisé en ce que ladite température du gaz gainant est comprise entre 100°C et 500°C.

3. Procédé selon la revendication 2, caractérisé en ce que ladite température du gaz gainant est comprise entre 200°C et 300°C et est notamment voisine de 250°C.

4. Procédé selon l'une quelconque des revendications précédentes, caractérisé en ce que le gaz gainant est le gaz de protection.

5. Procédé selon l'une quelconque des revendications 1 à 3, caractérisé en ce que le gaz gainant est distinct du gaz de protection et la veine de gaz gainant entoure la veine de gaz de protection.

6. Procédé selon la revendication 5, caractérisé en ce que le gaz gainant contient de l'oxygène et est notamment de l'air ambiant.

7. Procédé selon l'une quelconque des revendications précédentes, caractérisé en ce que le procédé de soudage à l'arc est un procédé de soudage sous gaz de protection à électrode réfractaire (soudage TIG).

8. Utilisation pour la réduction des émissions d'ozone produites lors d'une opération de soudage à l'arc sous gaz de protection, d'un gaz ayant, immédiatement en amont de la racine de l'arc électrique, une température supérieure à 100°C, ce gaz gainant l'arc électrique de soudage.

9. Utilisation selon la revendication 8, caractérisée en ce que le gaz gainant l'arc électrique est utilisé comme gaz de protection.

10. Utilisation selon la revendication 8 ou 9, caractérisée en ce que ladite température du gaz gainant est comprise entre 100°C et 500°C.

11. Utilisation selon la revendication 10, caractérisée en ce que la température du gaz gainant est comprise entre 200°C et 300°C et est notamment voisine de 250°C.

12. Dispositif de soudage comportant un dispositif de réduction des émissions d'ozone produites lors du soudage à l'arc sous gaz de protection, une électrode (10 ; 52 ; 80) destinée à être connectée à l'un des pôles d'un générateur de soudage (12) dont l'autre pôle est relié à l'objet à souder (P), et des moyens d'alimentation en gaz de protection (16, 26 ; 50, 54 ; 82, 84) pour protéger le bain de fusion (F) et l'arc électrique (A) établi entre l'électrode et l'objet à souder, caractérisé en ce que ledit dispositif de réduction des émissions d'ozone comporte des moyens (18, 38 ; 50, 54 ; 82, 84) de mise en oeuvre d'un gaz gainant l'arc électrique et ayant une température supérieure à 100°C immédiatement en amont de la racine de l'arc électrique, comprenant des moyens de chauffage (44, 66, 86) dudit gaz gainant.

13. Dispositif de soudage selon la revendication 12, caractérisé en ce que ladite température du gaz gainant est comprise entre 100°C et 500°C.

14. Dispositif de soudage selon la revendication 13, caractérisé en ce que la température du gaz gainant est comprise entre 200°C et 300°C et est notamment voisine de 250°C.

15. Dispositif de soudage selon l'une quelconque des revendications 12 à 14, caractérisé en ce que les moyens d'alimentation en gaz de protection comportent une buse interne (16) qui entoure ladite électrode (10), et en ce que lesdits moyens de mise en oeuvre du gaz gainant comportent des moyens d'alimentation (38) du gaz et une buse externe (18) de sortie du gaz gainant qui entoure ladite buse interne (16).

16. Dispositif de soudage selon l'une quelconque des revendications 12 à 14, caractérisé en ce que les moyens d'alimentation en gaz de protection comportent une buse (50 ; 82) qui entoure ladite électrode (52 ; 80), en ce que le gaz gainant est le gaz de protection, et en ce que lesdits moyens de mise en oeuvre du gaz gainant comportent des moyens (66; 86) de chauffage du gaz de protection avant sa sortie de la buse.

17. Dispositif de soudage selon la revendication 15 ou 16, caractérisé en ce que la buse est intégrée dans une torche et en ce que lesdits moyens (66 ; 86) de chauffage du gaz de protection sont logés dans ladite torche.

18. Dispositif de soudage selon la revendication 17, caractérisé en ce que les moyens (66; 86) de chauffage du gaz de protection sont disposés dans le passage du gaz à l'intérieur de la buse (50).

19. Dispositif de soudage selon la revendication 18, caractérisé en ce que les moyens de chauffage comportent une résistance chauffante (66) alimentée par une source de courant électrique (70).

20. Dispositif de soudage selon la revendication 18, caractérisé en ce que les moyens de chauffage comportent une barrière poreuse (86) disposée en travers du passage du gaz à l'intérieur de la buse (82), cette barrière (86) créant une perte de charge dans l'écoulement gazeux, assurant ainsi le chauffage du gaz accumulé en amont de ladite barrière (86) par transfert de chaleur depuis la structure de la buse (82), elle-même chauffée à partir de l'énergie rayonnée par l'arc électrique.

## Patentansprüche

1. Verfahren zur Verringerung der beim Lichtbogenschweißen unter Schutzgas anfallenden Ozonemissionen, bei dem man ein den Lichtbogen umhüllendes Gas einsetzt, dadurch gekennzeichnet, daß das Hüllgas unmittelbar vor der Wurzel des Lichtbogens eine Temperatur von mehr als 100°C aufweist.

2. Verfahren nach Anspruch 1, dadurch gekennzeichnet, daß die Temperatur des Hüllgases zwischen 100°C und 500°C liegt.

3. Verfahren nach Anspruch 2, dadurch gekennzeichnet, daß die Temperatur des Hüllgases zwischen 200°C und 300°C und insbesondere bei etwa 250°C liegt.

4. Verfahren nach einem der vorhergehenden Ansprüche, dadurch gekennzeichnet, daß man das Hüllgas als Schutzgas verwendet.

5. Verfahren nach einem der Ansprüche 1 bis 3, dadurch gekennzeichnet, daß das Hüllgas von dem Schutzgas verschieden ist und der Hüllgasstrom den Schutzgasstrom umgibt.

6. Verfahren nach Anspruch 5, dadurch gekennzeichnet, daß das Hüllgas Sauerstoff enthält und es sich dabei insbesondere um Luft handelt.

7. Verfahren nach einem der vorhergehenden Ansprüche, dadurch gekennzeichnet, daß es sich bei dem Lichtbogenschweißverfahren um ein Schweißverfahren mit nicht abschmelzender Elektrode unter Schutzgas (WIG-Schweißen) handelt.

8. Verwendung eines den Schweißlichtbogen umhüllenden Gases, das unmittelbar vor der Wurzel des Lichtbogens eine Temperatur von mehr als 100°C aufweist, zur Verringerung der beim Lichtbogenschweißen unter Schutzgas anfallenden Ozonemissionen.

9. Verwendung nach Anspruch 8, dadurch gekennzeichnet, daß das den Lichtbogen umhüllende Gas als Schutzgas verwendet wird.

10. Verwendung nach Anspruch 8 oder 9, dadurch gekennzeichnet, daß die Temperatur des Hüllgases zwischen 100°C und 500°C liegt.

11. Verwendung nach Anspruch 10, dadurch gekennzeichnet, daß die Temperatur des Hüllgases zwischen 200°C und 300°C und insbesondere bei etwa 250°C liegt.

12. Schweißvorrichtung mit einer Vorrichtung zur Verringerung der beim Lichtbogenschweißen unter Schutzgas anfallenden Ozonemissionen, einer Elektrode (10; 52; 80) zur Verbindung mit einem der Pole eines Schweißgenerators (12), dessen anderer Pol mit dem zu schweißenden Gegenstand (P) verbunden ist, und Einrichtungen zur Zufuhr von Schutzgas (16, 26; 50, 54; 82, 84) zum Schutz des Schweißbads (F) und des zwischen der Elektrode und dem zu schweißenden Gegenstand hergestellten Lichtbogens (A), dadurch gekennzeichnet, daß die Vorrichtung zur Verringerung der Ozonemissionen Einrichtungen (18, 38; 50, 54; 82, 84) zur Verwendung eines den Lichtbogen umhüllenden und unmittelbar vor der Wurzel des Lichtbogens eine Temperatur von mehr als 100°C aufweisenden Gases mit Einrichtungen (44, 66, 86) zum Erhitzen des Hüllgases enthält.

13. Schweißvorrichtung nach Anspruch 12, dadurch gekennzeichnet, daß die Temperatur des Hüllgases zwischen 100°C und 500°C liegt.

14. Schweißvorrichtung nach Anspruch 13, dadurch gekennzeichnet, daß die Temperatur des Hüllgases zwischen 200°C und 300°C und insbesondere bei etwa 250°C liegt.

15. Schweißvorrichtung nach einem der Ansprüche 12 bis 14, dadurch gekennzeichnet, daß die Einrichtungen zur Zufuhr von Schutzgas eine die Elektrode (10) umgebende interne Düse (16) enthalten und die Einrichtungen zur Verwendung des Hüllgases Einrichtungen (38) zur Zufuhr des Gases und eine die interne Düse (16) umgebende externe Hüllgasaustrittsdüse (18) enthalten.

16. Schweißvorrichtung nach einem der Ansprüche 12 bis 14, dadurch gekennzeichnet, daß die Einrichtungen zur Zufuhr von Schutzgas eine die Elektrode (52; 80) umgebende interne Düse (50; 82) enthalten Δ das Hüllgas das Schutzgas ist und die Einrichtungen zur Verwendung des Hüllgases Einrichtungen (66; 86) zum Erhitzen des Schutzgases vor dem Austritt aus der Düse enthalten.

17. Schweißvorrichtung nach Anspruch 15 oder 16, dadurch gekennzeichnet, daß die Düse in einen Brenner integriert ist und die Einrichtungen (66; 86) zum Erhitzen des Schutzgases in dem Brenner untergebracht sind.

18. Schweißvorrichtung nach Anspruch 17, dadurch gekennzeichnet, daß die Einrichtungen (66; 86) zum Erhitzen des Schutzgases in dem im Inneren der Düse (50) liegenden Gaskanal angeordnet sind.

19. Schweißvorrichtung nach Anspruch 18, dadurch gekennzeichnet, daß die Heizeinrichtungen einen durch eine elektrische Stromquelle (70) gespeisten Heizwiderstand (66) enthalten.

20. Schweißvorrichtung nach Anspruch 18, dadurch gekennzeichnet, daß die Heizeinrichtungen eine quer zum im Inneren der Düse (82) liegenden Gaskanal angeordnete poröse Barriere (86) enthalten, die in der Gasströmung einen Druckverlust bewirkt und dadurch das Erhitzen des vor der Barriere (86) angesammelten Gases durch Wärmeübertragung von der Düsenkonstruktion (82), die wiederum von der vom Lichtbogen ausgehenden Strahlungsenergie erhitzt wird, gewährleistet.

## Claims

1. Process for reducing the emission of ozone produced during a shielded arc welding operation, comprising the use of a gas sheathing the electric arc, characterized in that the said sheathing gas has a temperature greater than 100°C immediately upstream of the root of the electric arc.

2. Process according to Claim 1, characterized in that the said temperature of the sheathing gas is between 100°C and 500°C.

3. Process according to Claim 2, characterized in that the said temperature of the sheathing gas is between 200°C and 300°C and is especially close to 250°C.

4. Process according to any one of the preceding claims, characterized in that the sheathing gas is the shielding gas.

5. Process according to any one of Claims 1 to 3, characterized in that the sheathing gas is distinct from the shielding gas and the stream of sheathing gas surrounds the stream of shielding gas.

6. Process according to Claim 5, characterized in that the sheathing gas contains oxygen and is especially ambient air.

7. Process according to any one of the preceding claims, characterized in that the arc welding process is a shielded welding process using a refractory electrode (TIG welding).

8. Use, for reducing the emission of ozone produced during a shielded arc welding operation, of a gas having, immediately upstream of the root of the electric arc, a temperature greater than 100°C, this gas sheathing the electric welding arc.

9. Use according to Claim 8, characterized in that the gas sheathing the electric arc is used as the shielding gas.

10. Use according to Claim 8 or 9, characterized in that the said temperature of the sheathing gas is between 100°C and 500°C.

11. Use according to Claim 10, characterized in that the temperature of the sheathing gas is between 200°C and 300°C and is especially close to 250°C.

12. Welding apparatus comprising a device for reducing the emission of ozone produced during the shielded arc welding, an electrode (10; 52; 80) intended to be connected to one of the poles of a welding generator (12), the other pole of which is connected to the object to be welded (P), and means (16, 26; 50, 54; 82, 84) for feeding the shielding gas for shielding the weld puddle (F) and the electric arc (A) established between the electrode and the object to be welded, characterized in that the said device for reducing the emission of ozone comprises means (18, 38; 50, 54; 82, 84) for employing a gas sheathing the electric arc and having a temperature greater than 100°C immediately upstream of the root of the electric arc, including means (44, 66, 86) for heating the said sheathing gas.

13. Welding apparatus according to Claim 12, characterized in that the said temperature of the sheathing gas is between 100°C and 500°C.

14. Welding apparatus according to Claim 13, characterized in that the temperature of the sheathing gas is between 200°C and 300°C and is especially close to 250°C.

15. Welding apparatus according to any one of Claims 12 to 14, characterized in that the means for feeding the shielding gas comprise an internal nozzle (16) which surrounds the said electrode (10) and in that the said means for employing the sheathing gas comprise means (38) for feeding the gas and an external nozzle (18) for ejecting the sheathing gas, which external nozzle surrounds the said internal nozzle (16).

16. Welding apparatus according to any one of Claims 12 to 14, characterized in that the means for feeding the shielding gas comprise a nozzle (50; 82) which surrounds the said electrode (52; 80), in that the sheathing gas is the shielding gas and in that the said means for employing the sheathing gas comprise means (66; 86) for heating the shielding gas before its ejection from the nozzle.

17. Welding apparatus according to Claim 15 or 16, characterized in that the nozzle is built into a torch and in that the said means (66; 86) for heating the shielding gas are housed in the said torch.

18. Welding apparatus according to Claim 17, characterized in that the means (66; 86) for heating the shielding gas are placed in the passage for the gas inside the nozzle (50).

19. Welding apparatus according to Claim 18, characterized in that the heating means comprise a resistance heating element (66) supplied by an electric current source (70).

20. Welding apparatus according to Claim 18, characterized in that the heating means include a porous barrier (86) placed across the passage for the gas inside the nozzle (82), this barrier (86) creating a head loss in the gas flow, thus ensuring that the gas accumulated upstream of the said barrier (86) is heated by heat transfer from the structure of the nozzle (82) which is itself heated by means of the energy radiated by the electric arc.
